# EUROPÄISCHE PATENTSCHRIFT

(11) **EP 3 839 146 B1**
(45) Veröffentlichungstag und Bekanntmachung des Hinweises auf die Patenterteilung: **29.06.2022**
(21) Anmeldenummer: 20214868.0
(22) Anmeldetag: 17.12.2020
(51) Int. Cl.: E01C 23/088, E01C 19/00

(54) **VERFAHREN ZUM ABFRÄSEN VON VERKEHRSFLÄCHEN MIT EINER FRÄSWALZE, SOWIE FRÄSMASCHINE ZUR DURCHFÜHRUNG DES VERFAHRENS ZUM ABFRÄSEN VON VERKEHRSFLÄCHEN**
METHOD FOR MILLING TRAFFIC SURFACES WITH A MILLING ROLLER, AND MILLING MACHINE FOR CARRYING OUT THE METHOD FOR MILLING TRAFFIC SURFACES
PROCÉDÉ DE FRAISAGE DES SURFACES DE CIRCULATION À L'AIDE D'UN ROULEAU FRAISEUR AINSI QUE FRAISEUSE PERMETTANT LA MISE EN OEUVRE DU PROCÉDÉ DE FRAISAGE DES SURFACES DE CIRCULATION

(30) Priorität: 19.12.2019 DE 102019135225
(43) Veröffentlichungstag der Anmeldung: 23.06.2021
(73) Patentinhaber: Wirtgen GmbH, 53578 Windhagen (DE)
(72) Erfinder: Fritz, Matthias, 53773 Hennef (DE)
(74) Vertreter: dompatent von Kreisler Selting Werner - Partnerschaft von Patent- und Rechtsanwälten mbB

(56) Entgegenhaltungen:
- EP-A1- 0 964 958
- WO-A1-95/16228
- DE-A1-102011 106 139

## Beschreibung

Die Erfindung betrifft ein Verfahren zum Abfräsen von Verkehrsflächen mit einer Fräswalze nach Anspruch 1 oder 2 sowie eine Fräsmaschine nach dem Oberbegriff des Anspruchs 16 oder 17 zur Durchführung des Verfahrens zum Abfräsen von Verkehrsflächen.

Derartige Fräsmaschinen werden u.a. benötigt, um zur Herstellung eines neuen Straßenbelages zunächst den alten Straßenbelag einer Verkehrsfläche abzutragen.

Bei Straßenfräsarbeiten werden verschiedene Systeme zur automatischen Regelung der Frästiefe der Fräswalze eingesetzt. Einigen Systemen ist gemeinsam, dass ein konstanter Soll-Wert für die Frästiefe einmalig vorgegeben wird und dieser Wert solange eingehalten wird, bis manuell ein neuer Soll-Wert vorgegeben wird. Dieser Soll-Wert ist somit unabhängig von der Position der Fräsmaschine in der Ebene, so dass Unebenheiten in bestimmten Abschnitten der Verkehrsfläche nicht ausgeglichen werden können. Das Abfräsen einer bestehenden Verkehrsfläche mit einer konstant eingestellten Frästiefe führt dazu, dass die Unebenheiten auf der neuen Oberfläche abgebildet werden.

Dabei wird auf verschiedene Arten die tatsächliche Frästiefe (Ist-Wert) über einen Sensor gemessen und von einem Frästiefenregler mit der gewünschten Frästiefe (Soll-Wert) verglichen. Dieser Vergleich geschieht kontinuierlich und die ermittelte Soll-Wertabweichung wird im Frästiefenregler in ein Steuersignal zur Höhenverstellung der Fräswalze umgewandelt.

Aus der EP 0 964 958 A ist bereits ein Verfahren und eine Vorrichtung zum Abfräsen von Verkehrsflächen bekannt, mit dem langwellige Unebenheiten der Verkehrsfläche ausgeglichen werden können. Es erfolgt für die Frästiefe eine wegabhängige oder positionsabhängige Sollwertvorgabe für die Frästiefe.

Folgende Verfahren zur Messung des Ist-Wertes der Frästiefe werden in der EP 0 964 958 A beschrieben:
1. Höhenabtastung mit beliebigem Sensor am Kantenschutz,
2. Höhenabtastung mit einem Gleitski oder an einer Messlatte montierten Messrädern,
3. Multiplex-Höhenabtastungen mit mehreren Ultraschall-Sensoren in Reihe,
4. Relatives Abtasten der Höhe gegenüber einer zusätzlich geschaffenen Höhen-Referenz, und
5. Nivellierung mit einem Laser.

Das Ist-Profil der Verkehrsfläche kann gemäß EP 0 964 958 A mit Hilfe einer separaten Profilabtasteinrichtung gemessen werden, wobei die gemessenen Ist-Profildaten entsprechenden Positionsdaten einer relativen oder absoluten Positionsbestimmungseinrichtung zugeordnet werden. Die Soll-Profildaten werden, sofern sie nicht von einem auf der Fräsmaschine installierten Rechner berechnet werden, mit Hilfe von Datenträgern oder per Funk an die Maschinensteuerung übertragen.

Das bekannte Verfahren ist allerdings darauf beschränkt, dass die Frästiefenregelung nur entlang eines vorgegebenen Weges oder entlang einer durch Positionsdaten vorgegebenen Frässpur verwendbar ist.

Der Erfindung liegt die Aufgabe zugrunde, ein Verfahren und eine Vorrichtung zum Abfräsen einer Verkehrsfläche zu schaffen, die in einfacher Weise das wiederholte Fräsen einer ganz oder teilweise bereits gefrästen Verkehrsfläche mit einer oder mehreren Fräsmaschinen ermöglicht.

Zur Lösung dieser Aufgabe dienen erfindungsgemäß die Merkmale des Anspruchs 1 oder 2 bzw. 16 oder 17.

Gemäß dem erfindungsgemäßen Verfahren nach Anspruch 1 sind folgende Schritte vorgesehen:
- Erhalten und Speichern von Soll-Profildaten x, y, Ft (x, y) eines gewünschten Soll-Profils einer Oberfläche der zu bearbeitenden Verkehrsfläche nach erfolgter Bearbeitung, wobei Positionsdaten x, y in einem von der Fräsmaschine unabhängigen, insbesondere stationären, Koordinatensystem Sollwerte Ft (x, y) für die lokal gewünschten Frästiefe Ft zugeordnet werden, die relativ zur Oberfläche der zu bearbeitenden Verkehrsfläche vorgegeben werden,
- Bestimmen der aktuellen x, y-Position der Fräswalze im Koordinatensystem und Erfassen der aktuell relativ zur Oberfläche der Verkehrsfläche eingestellten Frästiefe Ft' der Fräswalze,
- während des Abfräsens Steuern der Frästiefe Ft der Fräswalze in Abhängigkeit des der aktuellen x, y-Position der Fräswalze zugeordneten Soll-wertes Ft (x, y) für die lokal gewünschte Frästiefe Ft und der aktuell erfass-ten Frästiefe Ft',
- Aktualisieren der Soll-Profildaten x, y, Ft (x, y) an der aktuellen Position x, y der Fräswalze auf der bearbeiteten Verkehrsfläche um den aktuell tatsächlich gefrästen Frästiefenbetrag zu einem aktualisierten Sollwert, und
- Speichern der aktualisierten Soll-Profildaten x, y, Ft (x, y).

Die aktuelle Berechnung im Fräsbetrieb kann daher anhand der erhaltenen Positionsdaten berücksichtigen, ob an der angegebenen Position noch ein Fräsbetrag offensteht oder ob der Sollwert bereits erreicht ist. Die Aktualisierung und Speicherung der Soll-Profildaten in Verbindung mit einer aktuellen Position ermöglicht im Resultat, dass eine bereits gefräste Teilfläche der Verkehrsfläche auch ein weiteres Mal von der gleichen oder einer anderen Fräsmaschine, der die gleichen aktualisierten Soll-Profildaten vorliegen, bearbeitet bzw. überfahren werden kann. Dadurch ist auch eine Bearbeitung einer Fläche möglich, die bereits teilweise gefräst worden ist.

Das Erfassen der Frästiefe bedeutet das Messen der aktuell eingestellten Frästiefe oder die Übernahme eines Stellwertes für die Frästiefe der Fräswalze aus der Maschinensteuerung.

Es versteht sich, dass die Steuerung der Frästiefe auch eine Regelung einschließen kann.

Vorzugsweise werden die aktualisierten Ist-Profildaten in Echtzeit gespeichert.

Alternativ können nach Anspruch 2 folgende Schritte vorgesehen sein:
- Erhalten und Speichern von Ist-Profildaten x, y, z eines Ist-Profils der Oberfläche der zu bearbeitenden Verkehrsfläche und Soll-Profildaten x, y, z' eines gewünschten Soll-Profils der Oberfläche der Verkehrsfläche nach erfolgter Bearbeitung, wobei Positionsdaten x, y in einem von der Fräsmaschine unabhängigen, insbesondere stationären, Koordinatensystem gemessene Ist-Profilwerte z (x, y) bzw. vorgegebene lokal gewünschte Soll-Profilwerte z' (x, y) zugeordnet werden,
- Bestimmen der aktuellen x, y-Position der Fräswalze im Koordinatensystem und Erfassen der aktuell relativ zur Oberfläche der Verkehrsfläche eingestellten Frästiefe Ft',
- Steuern der Frästiefe Ft der Fräswalze in Abhängigkeit der der aktuellen x, y-Position der Fräswalze zugeordneten Differenz zwischen Ist-Profilwert z (x, y) und Soll-Profilwert z' (x, y) und der aktuell erfassten Frästiefe Ft',
- Aktualisieren der Ist-Profildaten x, y, z an der aktuellen Position x, y der Fräswalze auf der bearbeiteten Verkehrsfläche um die aktuell tatsächlich gefräste Frästiefe Ft, und
- Speichern der aktualisierten Ist-Profildaten x, y, z.

Demzufolge ist nach der zweiten Alternative vorgesehen, dass zusätzlich zu den Soll-Profildaten auch Ist-Profildaten erhalten und gespeichert werden. Bei der Steuerung bzw. Regelung der Frästiefe wird die Differenz zwischen Ist- und Soll-Profilwert gebildet und die Frästiefe unter Berücksichtigung der aktuell eingestellten Frästiefe gesteuert.

Dabei werden die Ist-Profildaten um den tatsächlich gefrästen Fräsbetrag aktualisiert. Es versteht sich, dass alternativ statt der Ist-Profildaten die Soll-Profildaten aktualisiert werden können. Vorzugsweise werden die aktualisierten Ist-Profildaten in Echtzeit gespeichert.

Bei jeder der Alternativen können folgende Schritte vorgesehen sein:
- Aufnehmen des Ist-Profils und Erzeugen von Ist-Profildaten x, y, z der zu bearbeitenden Verkehrsfläche in einem von der Fräsmaschine unabhängigen, insbesondere stationären, Koordinatensystem, und
- Erzeugen und Speichern des Soll-Profils durch Berechnen von Soll-Profildaten x, y, Ft (x, y) auf der Basis der Ist-Profildaten x, y, z und der lokal gewünschten Frästiefe relativ zur Oberfläche der Verkehrsfläche oder durch Berechnen von Soll-Profildaten x, y, z' (x, y) in dem unabhängigen Koordinatensystem auf der Basis der erhaltenen Ist-Profildaten x, y, z und der lokal gewünschten Frästiefe.

Hierbei kann vorgesehen sein, dass die Verkehrsfläche beim Aufnehmen des Ist-Profils für das Erzeugen der Ist-Profildaten in Felder unterteilt wird, wobei jedem Feld oder vorzugsweise jedem Knotenpunkt der virtuellen Begrenzungslinien zwischen den Feldern eine x, y-Position zugeordnet wird.

Beim Erzeugen des Soll-Profils für die Soll-Profildaten kann auch die herzustellende Verkehrsfläche in Felder unterteilt werden, wobei jedem Feld oder jedem Knotenpunkt der virtuellen Begrenzungslinien zwischen den Feldern eine x, y-Position im gemeinsamen Koordinatensystem zugeordnet wird.

Bei allen Alternativen kann vorgesehen sein, dass die Frästiefe an den seitlichen Enden mit den Positionen xL, yL; xR, yR der Fräswalze hinsichtlich der jeweiligen aktuellen x, y-Position separat gesteuert wird.

Bei einer Weiterbildung kann vorgesehen sein, dass die aktualisierten Soll- bzw. Ist-Profildaten x, y, Ft (x, y); x, y, z unter Berücksichtigung der Fräsbreite Fb und der räumlichen Orientierung der Fräswalze gespeichert werden, wobei
- jeder x, y-Position der Fräswalze auf der abgearbeiteten Verkehrsfläche an den seitlichen Enden mit den Positionen xL, yL; xR, yR der Fräswalze der jeweilig aktualisierte Soll-Profilwert Ft (xL, yL); Ft (xR, yR) bzw. Ist-Profilwert z (xL, yL); z (xR, yR) zugeordnet wird.

Dabei können vorzugsweise den Positionen xn, yn der Fräswalze zwischen den seitlichen Enden mit den Positionen xL, yL; xR, yR interpolierte aktualisierte Soll-Profilwerte Ft (xn, yn) bzw. Ist-Profilwerte z (xn, yn) zugeordnet werden.

Beispielsweise können dies Positionen entlang der tiefsten Kontaktlinie der Fräswalze sein.

Vorzugsweise ist vorgesehen, dass die Verkehrsfläche in dreieckige oder rechteckige Felder unterteilt wird, deren unterschiedliche oder gleiche Kantenlänge im Bereich zwischen 1 mm und 50 cm, vorzugsweise zwischen 5 mm und 20 cm, liegt.

Dabei erfolgt ein Zuordnen der aktualisierten interpolierten Soll-Profilwerte Ft (xn, yn) bzw. Ist-Profilwerte z (xn, yn) zu den von der Fräswalze zwischen den Enden mit den Positionen xL, yL; xR, yR überstrichenen Knotenpunkten.

Bei einer besonders bevorzugten Ausführungsform wird für die x, y-Positionen der Ist-Profildaten und der Soll-Profildaten ein absolutes Koordinatensystem verwendet.

Erfindungsgemäß kann es vorgesehen sein, dass das Verfahren ferner die zusätzlichen Schritte umfasst:
während eines ersten Fräsdurchgangs Ermitteln einer aktuellen x-, y-Position der Fräswalze (4) imKoordinatensystem;
während des ersten Fräsdurchgangs Erfassen der aktuellen Frästiefe (Ft'); während des ersten Fräsdurchgangs Steuerung der Frästiefe (Ft) der Fräswalze (4) und anteiliges Abfräsen der Verkehrsfläche (3) derart, dass eine gewünschte Fräsmenge der Verkehrsfläche (3) ausstehend verbleibt;
Aktualisierung der Soll-Profildaten (x, y, Ft_{(x,y)}) in der aktuellen Position (x, y) der Fräswalze (4) um die aktuell tatsächlich gefräste Frästiefe (Ft), wobei die aktualisierten Soll-Profildaten (x, y, Ft_{(x,y)}) einen aktualisierten Sollwert für die örtlich gewünschte Frästiefe (Ft) umfassen;
Speichern der aktualisierten Sollprofildaten (x, y, Ft_{(x,y)});
während eines zweiten Fräsdurchgangs Ermitteln einer aktuellen x-, y-Position der Fräswalze (4) im Koordinatensystem;
während des zweiten Fräsdurchgangs Erfassen der aktuellen Frästiefe (Ft'); und während des zweiten Fräsdurchgangs Steuerung der Frästiefe (Ft) der Fräswalze (4) in Abhängigkeit vom aktualisierten Sollwert für die örtlich gewünschte Frästiefe (Ft_{(x,y)}), der der aktuellen x-, y-Position der Fräswalze (4) zugeordnet ist und der aktuell ermittelten Frästiefe (Ft').

Alternativ kann das erfindungsgemäße Verfahren ferner die zusätzlichen Schritte umfassen:
während eines ersten Fräsdurchgangs Ermitteln einer aktuellen x-, y-Position der Fräswalze (4) im Koordinatensystem;
während des ersten Fräsdurchgangs Erfassen der aktuellen Frästiefe (Ft'); während des ersten Fräsdurchgangs Steuerung der Frästiefe (Ft) der Fräswalze (4) und anteiliges Abfräsen der Verkehrsfläche (3) derart, dass eine gewünschte Fräsmenge der Verkehrsfläche (3) ausstehend verbleibt;
Aktualisierung der tatsächlichen Profildaten (x, y, z) in der aktuellen Position (x, y) der Fräswalze (4) um die aktuell tatsächlich gefräste Frästiefe (Ft); Speichern der aktualisierten tatsächlichen Profildaten (x, y, z);
während eines zweiten Fräsdurchgangs Ermitteln einer aktuellen x-, y-Position der Fräswalze (4) im Koordinatensystem;
während des zweiten Fräsdurchgangs Erfassen der aktuellen Frästiefe (Ft'); und während des zweiten Fräsdurchgangs Steuerung der Frästiefe (Ft) der Fräswalze (4) in Abhängigkeit der der aktuellen x, y -Position der Fräswalze (4) zugeordneten Differenz zwischen Ist-Profilwert (z _{(x,y)}) und Soll-Profilwert (z' _{(x,y)}) und der aktuell erfassten Frästiefe (Ft').

Bevorzugt kann der erste und der zweite Fräsdurchgang von derselben Fräsmaschine (4) ausgeführt werden.

Alternativ kann es jedoch ebenfalls vorgesehen werden, dass der erste Fräsdurchgang von einer ersten Fräsmaschine (4) und der zweite Fräsdurchgang von einer zweiten Fräsmaschine (4) ausgeführt wird.

Bevorzugt kann die zweite Fräsmaschine (4) über die aktualisierten Sollprofildaten (x, y, Ft_{(x,y)}) und/oder die aktualisierten tatsächlichen Profildaten (x, y, z) verfügen.

Bei einer Fräsmaschine zum Abfräsen von Verkehrsflächen, mit
- einem Maschinenrahmen,
- mit einer höhenverstellbaren Fräswalze,
- einer Maschinensteuerung zum Steuern der Frästiefe mit einem Rechner und einem Speicher,
- einer Positionsbestimmungseinrichtung, die Positionsdaten x, y für die aktuelle Position der Fräswalze in einem von der Fräsmaschine unabhängigen, insbesondere stationären, Koordinatensystem der Maschinensteuerung zuführt,
- einer Frästiefenmesseinrichtung, die die aktuell eingestellte Frästiefe Ft' der Fräswalze der Maschinensteuerung zuführt,
ist vorgesehen, dass
die Maschinensteuerung vorgegebene Soll-Profildaten x, y, Ft (x, y) einer Oberfläche der zu bearbeitenden Verkehrsfläche im Soll-Zustand erhält, und die Soll-Profildaten x, y, Ft (x, y) in dem Speicher speichert, bei denen den Positionsdaten x, y relativ zur Oberfläche vorgegebene Sollwerte Ft (x, y) für die lokal gewünschte Frästiefe zugeordnet sind,
der Rechner der Maschinensteuerung in Abhängigkeit der aktuellen Positionsdaten x, y der Fräswalze, der aktuell erfassten Frästiefe Ft' und dem der Position der Fräswalze zugeordneten Soll-Wert Ft (x, y) die Frästiefe der Fräswalze steuert, wobei
der Rechner der Maschinensteuerung die Soll-Profilwerte Ft (x, y) der Soll-Profildaten x, y, Ft (x, y) an der jeweiligen aktuellen Position der Fräswalze auf der bearbeiteten Verkehrsfläche um die aktuell tatsächlich gefräste Frästiefe aktualisiert und die aktualisierten Soll-Profildaten x, y, Ft (x, y) in dem Speicher speichert.

Bei einer alternativen Fräsmaschine zum Abfräsen von Verkehrsflächen, mit
- einem Maschinenrahmen,
- mit einer höhenverstellbaren Fräswalze,
- einer Maschinensteuerung zum Steuern der Frästiefe mit einem Rechner und einem Speicher,
- einer Positionsbestimmungseinrichtung, die Positionsdaten x, y für die aktuelle Position der Fräswalze in einem von der Fräsmaschine unabhängigen, insbesondere stationären, Koordinatensystem der Maschinensteuerung zuführt,
- einer Frästiefenmesseinrichtung, die die aktuell erfasste Frästiefe Ft' der Fräswalze der Maschinensteuerung zuführt,
ist vorgesehen, dass
die Maschinensteuerung vorgegebene Ist-Profildaten x, y, z der Oberfläche der zu bearbeitenden Verkehrsfläche und Soll-Profildaten x, y, z' der gewünschten Oberfläche im Soll-Zustand der bearbeiteten Verkehrsfläche erhält und in dem Speicher speichert,
der Rechner der Maschinensteuerung in Abhängigkeit der aktuellen Positionsdaten x, y der Fräswalze, der aktuell erfassten Frästiefe Ft' und der Differenz zwischen den Soll- und Ist-Profilwerten z' (x, y); z (x, y) die Frästiefe der Fräswalze steuert, wobei
der Rechner der Maschinensteuerung die Ist-Profilwerte z der Ist-Profildaten in der jeweiligen aktuellen Position x, y der Fräswalze auf der gefrästen Verkehrsfläche um die aktuell tatsächlich gefräste Frästiefe aktualisiert und die aktualisierten Ist-Profildaten x, y, z in dem Speicher speichert.

Die erfasste Frästiefe kann die aktuell in der Maschinensteuerung eingestellte Frästiefe oder eine aktuell gemessene Frästiefe sein.

Die aktualisierten Profildaten können in Echtzeit abgespeichert werden.

Bei beiden Alternativen kann vorgesehen sein, dass der Rechner der Maschinensteuerung die Frästiefe an den seitlichen Enden mit den Positionen xL, yL; xR, yR der Fräswalze bezüglich der jeweiligen Positionen xL, yL und xR, yR separat steuert.

Bevorzugt kann die Maschinensteuerung die aktualisierten Soll- bzw. Ist-Profildaten x, y, Ft (x, y); x, y, z unter Berücksichtigung der Fräsbreite Fb und der räumlichen Orientierung der Fräswalze in dem Speicher abspeichern, wobei der Rechner der Maschinensteuerung jeder Position der Fräswalze auf der gefrästen Verkehrsfläche an den stirnseitigen Enden xL, yL; xR, yR der Fräswalze den jeweilig aktualisierten Sollwert Ft (xL, yL); Ft (xR,yR) bzw. Ist-Profilwert z (xL, yL); z (xR, yR) zuordnet.

Dabei kann die Maschinensteuerung auch Positionen xn, yn entlang der Fräswalze zwischen den seitlichen Enden mit den Positionen xL, yL; xR, yR interpolierte aktualisierte Soll-Profilwerte Ft (xn, yn) bzw. Ist-Profilwerte z (xn, yn) zuordnen.

Im Folgenden werden unter Bezugnahme auf die Zeichnungen Ausführungsbeispiele der Erfindung näher erläutert.

Es zeigen:
- Fig. 1: eine Fräsmaschine (ohne Transportband) zur Durchführung des Verfahrens zum Abfräsen einer Oberfläche von Verkehrsflächen,
- Fign. 2 und 3: die Abläufe der erfindungsgemäßen Verfahren,

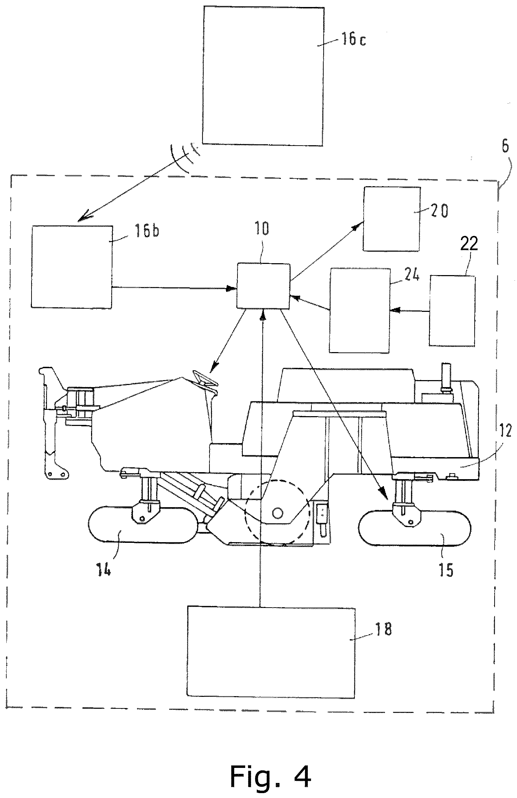

- Fig. 4: eine schematische Darstellung der Peripherie der Maschinensteuerung der erfindungsgemäßen Fräsmaschine,
- Fig. 5: schematisch ein gewünschtes Soll-Profil einer Oberfläche,
- Fig. 6: das Ist-Profil der Oberfläche der Verkehrsfläche,
- Fig. 7: die Überlagerung des Ist-Profils mit dem Soll-Profil,
- Fig. 8: eine teilweise bearbeitete Verkehrsfläche,
- Fig. 9: einen Schnitt entlang der Linie A-A in Fig. 7,
- Fig. 10: einen Schnitt entlang der Linie B-B in Fig. 7,
- Fig. 11: eine vergrößerte Darstellung in Draufsicht des Details X in Fig. 7, und
- Fig. 12: das Detail X in perspektivischer Darstellung des Ist-Profils der unbearbeiteten Verkehrsfläche und des ebenen Soll-Profils der tiefer liegenden bearbeiteten Verkehrsfläche.

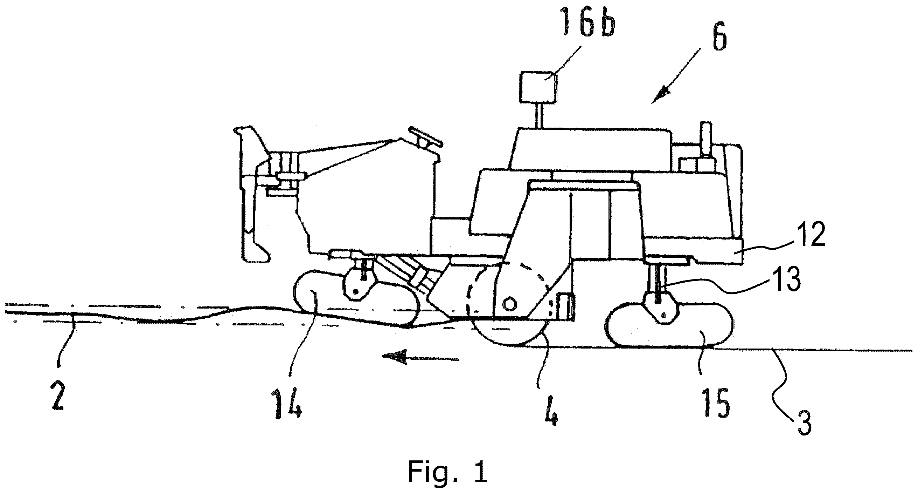

Fig. 1 zeigt schematisch eine Fräsmaschine 6 (ohne vordere Transporteinrichtung), deren vorderes Kettenlaufwerk 14 auf der noch unbearbeiteten Verkehrsfläche 2 aufliegt, während das hintere Kettenlaufwerk 15 bereits auf der Frässpur der abgearbeiteten Verkehrsfläche 3 aufliegt. Zur Frästiefeneinstellung für die Fräswalze 4 können die Hubsäulen 13 beider Kettenlaufwerke 14, 15 verstellt werden. Aufwendiger ist dagegen, eine Höhenverstellung der Fräswalze 4 selbst vorzusehen.

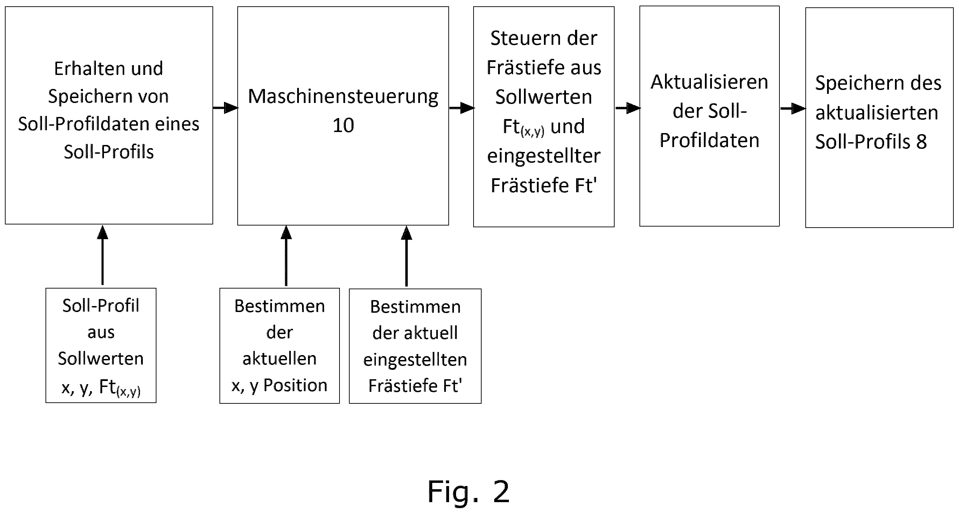

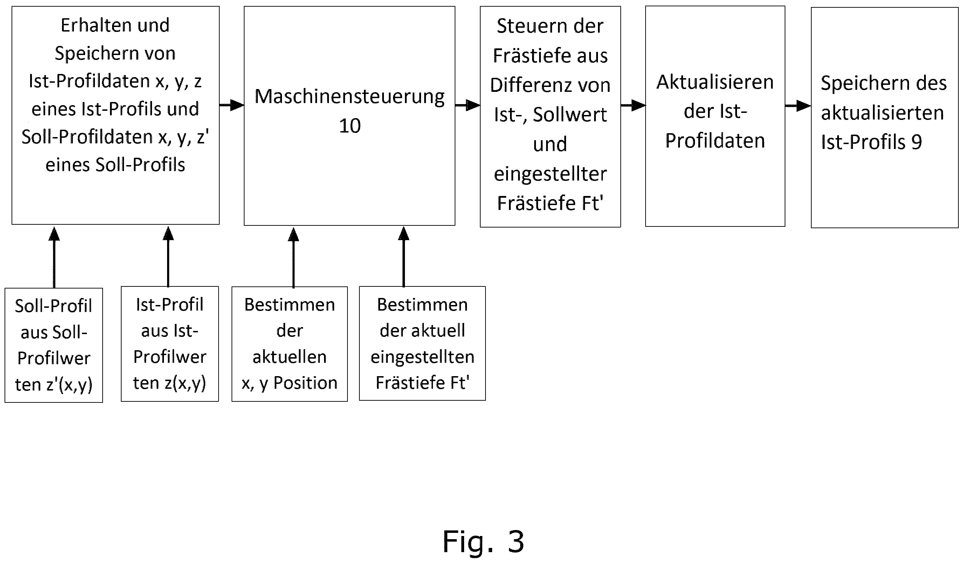

Die alternativen Verfahren zum Abfräsen von Verkehrsflächen 2 sind in den Figuren 2 und 3 näher erläutert.

Die zu bearbeitende Verkehrsfläche 2 wird in ihren x, y-Koordinaten erfasst, wobei jeder Position x, y ein Frästiefenwert Ft (x, y) zugeordnet wird, wodurch Soll-Profildaten x, y, Ft (x, y) erzeugt werden, die der Maschinensteuerung 10 zugeführt und dort abgespeichert werden können.

Der Fräsprozess besteht nun darin, zunächst die aktuelle x, y-Position der Fräswalze 4 zumindest hinsichtlich der Wegkoordinaten zu bestimmen. Dies erfolgt beispielsweise mit einer Positionsbestimmungseinrichtung 16, deren mobiler Teil 16b an dem Maschinenrahmen 12 der Fräsmaschine 6 angeordnet ist.

Die Positionsermittlung für die Position der Fräswalze 4 kann beispielsweise über die nachfolgend beschriebenen Verfahren erfolgen:
a) bei der absoluten Positionsbestimmung werden die Maschinenkoordinaten in allen drei Raumkoordinaten (x, y, z) absolut gemessen. Dies kann z. B. mit gestütztem GNS-System oder mit Laser-Tracking-Stationen mit automatischer Zielverfolgung (Totalstationen) erfolgen.

Bei dem GNS-System erfolgt die Positionsbestimmung mit Hilfe von Satelliten, wobei zur Positionsbestimmung die Laufzeitunterschiede von Signalen zwischen unterschiedlich positionierten Satelliten und dem Gegenstand verwendet werden. Höhere Genauigkeiten werden mittels des DGNS-Systems erreicht (Differential-GNSS), bei dem zusätzlich zu dem mit der Fräsmaschine 6 bewegten GNSS-Empfänger 16b ein stationärer GNSS-Empfänger 16c im näheren Umfeld aufgestellt wird. Durch die Differenzbildung der Signale beider GNSS-Empfänger erhält man eine höhere Genauigkeit. Zur Erzielung noch höherer Genauigkeiten kann die Positionsinformation zusätzlich über Kreiselkompass, Wegimpuls und Lenkinformationen korrigiert werden (gestütztes DGNS-System).

b) Bei Verwendung einer oder mehrerer automatischer Totalstationen wird die Maschine mit einem Reflektor, nämlich einem aktiven oder passiven Prisma, ausgerüstet, das einen von einer Sende-/Empfangseinheit ausgesandten Laserstrahl zu derselben zurückreflektiert. Aus der Laufzeit und/oder der Phasenlage des Signals und den Empfangswinkeln kann die Position der Maschine errechnet werden.

Aus der Differenz der Daten des stationären GNS-Systems 16c und des mobilen GNS-Systems 16b lässt sich die Ist-Position der Fräswalze 4 in Absolutwerten in x-, y- und z-Koordinaten bestimmen. Die Messwerte der Positionsbestimmungseinrichtung 16b, 16c werden der Maschinensteuerung 10 zugeführt und können dort mit Hilfe eines Monitors bzw. einer Anzeigeeinrichtung 20 angezeigt werden. Die aktuelle Frästiefe kann über eine Frästiefenmesseinrichtung 18 gemessen und an die Maschinensteuerung 10 übermittelt werden.

Die Soll-Profildaten werden beispielsweise, wie in Fig. 2 gezeigt, an einen Rechner 22 übertragen, der das erhaltene Soll-Profil und das aktualisierte Soll-Profil in einem Speicher 24 der Maschinensteuerung 10 speichern kann.

Dabei kann alternativ auch vorgesehen sein, die Soll-Profildaten drahtlos an die Maschinensteuerung 10 zu übertragen.

Zur Anzeige von Daten oder des Arbeitsfortschritts, z. B. des Zustandes der Verkehrsfläche 2 bzw. der abgearbeiteten Verkehrsfläche 3, kann eine an die Maschinensteuerung 10 angeschlossene Anzeigeeinrichtung 20 vorgesehen sein.

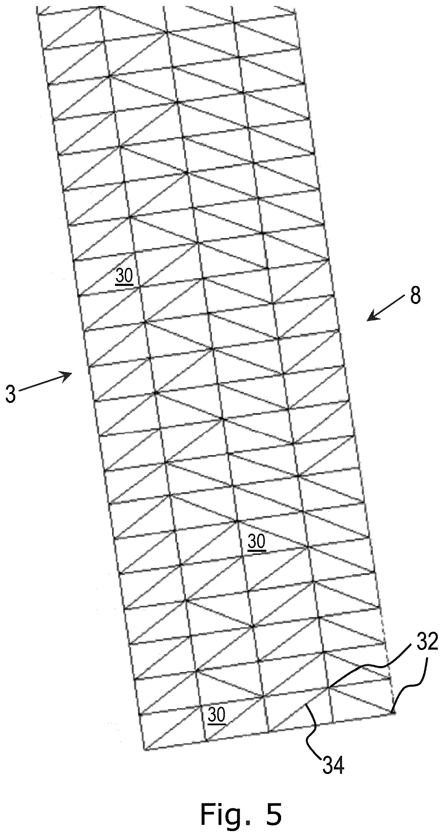

Fig. 5 stellt schematisch ein gewünschtes Soll-Profil x, y, z' einer Oberfläche der bearbeiteten Verkehrsfläche 3 dar, bei dem eine relativ zur Oberfläche der Verkehrsfläche 2 vorgegebene gewünschte Frästiefe Ft den jeweiligen Positionsdaten x, y in einem von der Fräsmaschine 6 unabhängigen, insbesondere stationären, Koordinatensystem zugeordnet ist.

Das Koordinatensystem hat eine beliebige, aber konstante Richtungsorientierung relativ zum Verlauf der zu bearbeitenden Verkehrsfläche 2 und ist daher insbesondere nicht zwangsläufig parallel zu den Begrenzungen der Verkehrsfläche 2.

Das Soll-Profil 8, das aus Soll-Profildaten gebildet ist, wird vorzugsweise im Voraus für eine zu bearbeitende Verkehrsfläche 2 berechnet und wird vor Inbetriebnahme der Fräsmaschine 6 der Maschinensteuerung 10 zugeführt, wobei die Soll-Profildaten des gewünschten Soll-Profils in einem Speicher 24 gespeichert werden können.

Das Soll-Profil 8 kann in Felder 30 unterteilt werden, die beispielsweise rechteckig, quadratisch oder vorzugsweise dreieckförmig ausgebildet sein können. Die Felder 30 sind durch virtuelle Begrenzungslinien 34 begrenzt, wobei alternativ den Feldern 30 Positionsdaten x, y, oder vorzugsweise den von den virtuellen Begrenzungslinien 34 gebildeten Knotenpunkten 32 die Koordinaten der Position x, y zugeordnet werden.

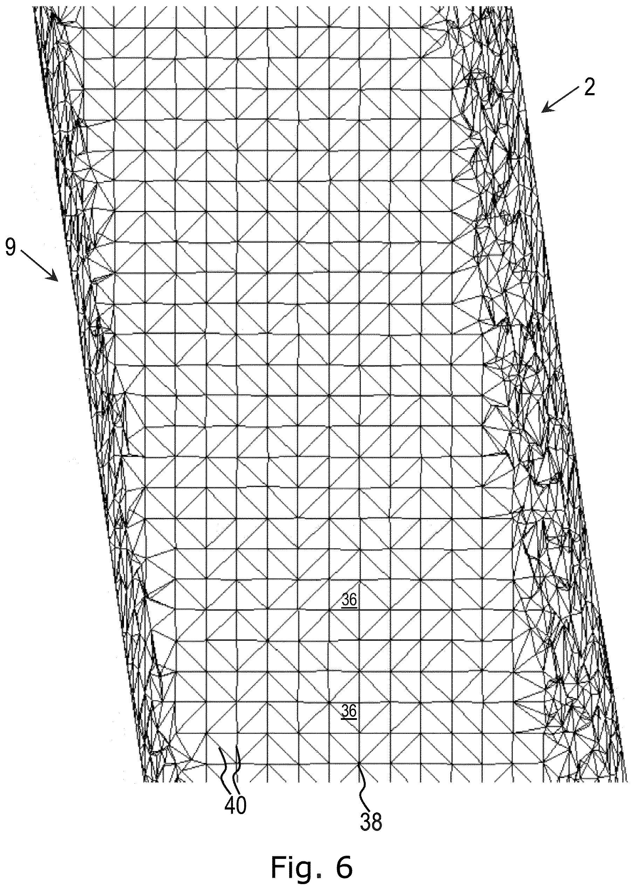

Fig. 6 zeigt das Ist-Profil 9, bei dem die Oberfläche der Verkehrsfläche 2 in ähnlicher Weise wie das Soll-Profil 8 in Felder 36 unterteilt ist. Auch diese Felder 36 können beispielsweise quadratisch, rechteckig oder vorzugsweise dreieckförmig, wie in Fig. 6 ersichtlich, gestaltet sein. Den Knotenpunkten 38 sind Koordinaten x, y des von der Fräsmaschine 6 unabhängigen Koordinatensystems zugeordnet.

Die Knotenpunkte 38 werden durch die virtuellen Begrenzungslinien 40 der Felder 36 gebildet.

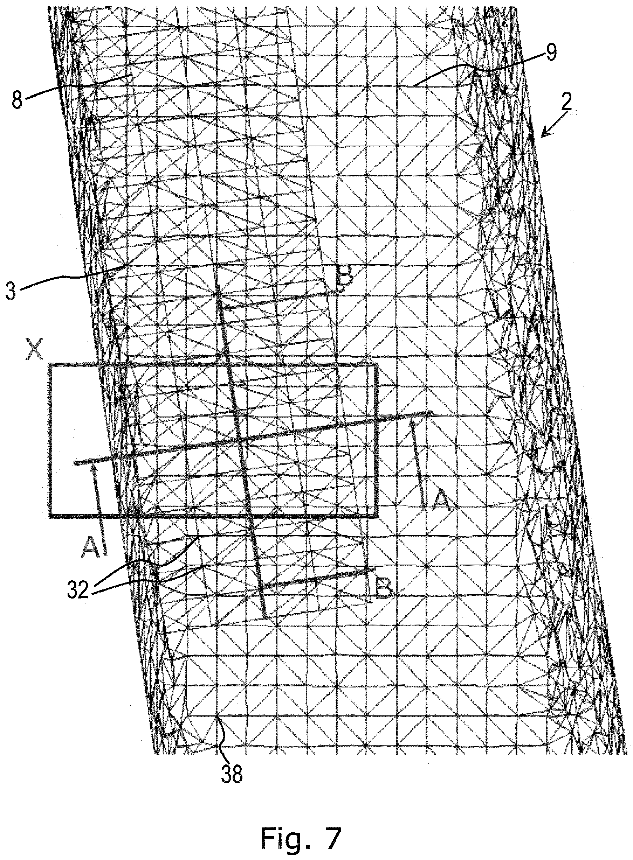

Fig. 7 zeigt die Überlagerung des Ist-Profils 9 der zu bearbeitenden Verkehrsfläche 2 mit dem gestrichelt dargestellten Soll-Profil 8 für diese Verkehrsfläche 2, wie es aus Fig. 5 ersichtlich ist. Das dargestellte Soll-Profil 8 besteht beispielsweise aus zwei nebeneinander verlaufenden Frässpuren, die als Beispiel eine Fräsbreite von zwei nebeneinanderliegenden Rechtecken aus vier Feldern 30 aufweisen.

Fig. 7 zeigt eine nur teilweise Überlagerung des Soll-Profils 8 mit dem Ist-Profil 9 der unbearbeiteten Verkehrsfläche 2. Bei der Bearbeitung der Verkehrsfläche 2 versteht es sich, dass letztlich die gesamte Verkehrsfläche 2 mit einem Soll-Profil 8 überlagert sein kann, wenn die gesamte Verkehrsfläche 2 und nicht nur ein Teil bearbeitet werden soll.

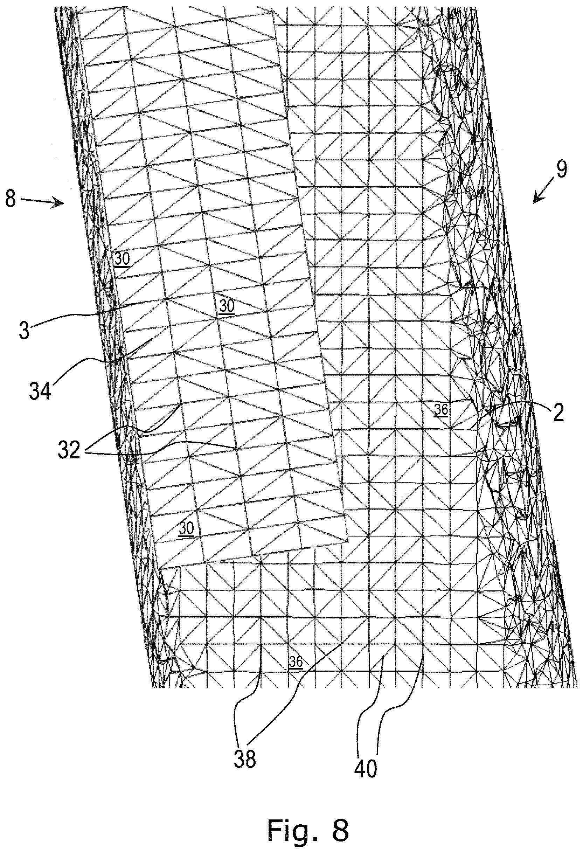

In Fig. 8 ist im Bereich der bereits gefrästen Verkehrsfläche 3 das Ist-Profil 9 nicht überlagert, so dass nur das Soll-Profil 8 sichtbar ist, welches der Oberfläche der bearbeiteten Verkehrsfläche 3 entsprechen soll.

Wie aus den Figuren 7 und 8 entnommen werden kann, muss die Ausrichtung, Form und Größe der Felder 30 des Soll-Profils 8 nicht mit der Ausrichtung, Form und Größe der Felder 36 des Ist-Profils 9 übereinstimmen. Wesentlich ist lediglich, dass die Positionen der Knotenpunkte 32, 38 sich auf das gleiche stationäre, vorzugsweise absolute, Koordinatensystem beziehen.

Die Fräsmaschine 6 kann zum Abfräsen einer Oberfläche der zu bearbeitenden Verkehrsfläche 2 beliebig auf der Verkehrsfläche 2 und einer bereits gefrästen Verkehrsfläche 3 bewegt werden.

Die Maschinensteuerung 10 liest zu jeder aktuellen Position x, y der Fräswalze 4 den zugehörigen Sollwert Ft (x, y) für die lokal gewünschten Frästiefe Ft aus dem das Soll-Profil enthaltenden Speicher 24 und steuert dementsprechend unter Berücksichtigung der aktuell relativ zur Oberfläche der Verkehrsfläche 2 eingestellten Frästiefe Ft' die aktuelle Frästiefe Ft der Fräswalze 4. Dabei werden gleichzeitig die Soll-Profildaten x, y, Ft (x, y) für die aktuell bereits gefräste Verkehrsfläche 3 aktualisiert und gespeichert.

Die Aktualisierung verhindert, dass bei einem erneuten Überfahren der gleichen Position mit der Fräswalze 4 eine bereits gefräste Verkehrsfläche 3 erneut gefräst wird.

Bei einem bevorzugten Ausführungsbeispiel werden beim Überfahren einer Verkehrsfläche 2,3 die Positionen xL, yL; xR, yR der stirnseitigen Enden der Fräswalze 4 erfasst, an denen die Frästiefe Ft jeweils separat gesteuert wird. Ist an einem Ende der Fräswalze 4 die lokal gewünschte Frästiefe Ft bereits erreicht und liegt dementsprechend ein entsprechend aktualisierter Sollwert Ft (x, y) vor, ändert sich auch die aktuell an dieser Stelle eingestellte Frästiefe Ft' zur Oberfläche der Verkehrsfläche 3, so dass die Maschinensteuerung 10 beim Übergang von einer bereits gefrästen Verkehrsfläche 3 zu einer noch zu bearbeitenden Verkehrsfläche 2 und umgekehrt keine Korrektur der Frästiefe vornehmen muss.

Die Positionen xL, yL; xR, yR der stirnseitigen Enden der Fräswalze 4 bestimmen sich gemäß der tiefsten Position des Schnittkreises der Fräswalze 4.

Die Maschinensteuerung 10 kann die Fahrtrichtung der Fräsmaschine im Koordinatensystem aus der Änderung der x, y-Positionswerte und die Fahrgeschwindigkeit aus der zeitlichen Änderung der x, y-Positionswerte berechnen.

Werden Knotenpunkte 32 des Sollprofils 8 beim Fräsen überfahren, werden die Soll-Profildaten x, y, Ft (x, y) aktualisiert.

Die Aktualisierung der Soll-Profildaten kann beispielsweise dadurch erfolgen, dass der Rechner überprüft, ob die Linie der tiefsten Position des Schnittkreises zwischen den stirnseitigen Enden der Fräswalze 4 Knotenpunkte 32 überfährt. Ist dies der Fall, wird den Koordinaten des Knotenpunktes 32 ein aktualisierter Frästiefenwert, der um den aktuell gefrästen Frästiefenbetrag aktualisiert ist, zugeordnet und in dem Speicher 24 zur Aktualisierung der Soll-Profildaten gespeichert.

Zwischen den stirnseitigen Enden der Fräswalze 4 liegende Knotenpunkte 32 können durch Interpolation aktualisiert werden.

Bei der alternativen Verfahrensweise wird zusätzlich das Ist-Profil in dem Speicher 24 der Maschinensteuerung 10 gespeichert. Der Rechner 22 der Maschinensteuerung 10 steuert in Abhängigkeit der aktuellen Positionsdaten x, y der Fräswalze 4, der aktuell erfassten Frästiefe Ft' und der Differenz zwischen den Soll- und Ist-Profilwerten z' (x, y); z (x, y) die Frästiefe Ft der Fräswalze 4. Der Rechner 22 der Maschinensteuerung 10 aktualisiert die Ist-Profilwerte z der Ist-Profildaten in der jeweiligen aktuellen Position x, y der Fräswalze 4 auf der gefrästen Verkehrsfläche 3 um die aktuell tatsächlich gefräste Frästiefe Ft und speichert die aktualisierten Ist-Profildaten x, y, z in dem Speicher 24.

Vorzugsweise werden die aktualisierten Ist-Profildaten in Echtzeit gespeichert. Es versteht sich, dass alternativ statt der Ist-Profildaten die Soll-Profildaten aktualisiert werden können.

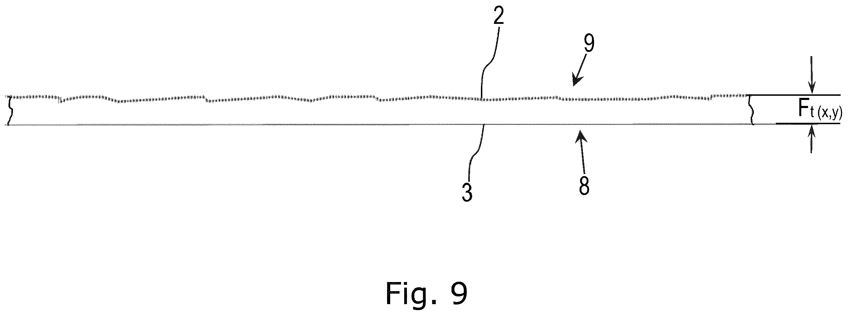

Fig. 9 zeigt einen Querschnitt durch die Verkehrsflächen 2, 3 in Richtung der Linie A-A in Fig. 7 vor der Bearbeitung. Es ist erkennbar, dass das Ist-Profil 9 eine unebene Verkehrsfläche 2 aufweist, wobei die Unebenheiten in Fig. 9 zur Verdeutlichung überhöht dargestellt sind. Das tiefer liegende Soll-Profil 8 zeigt die erwünschte ebene Verkehrsfläche 3 nach dem Abschluss aller Fräsvorgänge. Das Ist-Profil 9 hat einen positionsabhängigen Abstand von dem Soll-Profil 8, welches der Frästiefe Ft entspricht. Der Querschnitt gemäß Fig. 9 verläuft im Wesentlichen quer zur Längsrichtung der Verkehrsflächen 2,3 und bildet beispielsweise Spurrillen in der Fahrbahn ab.

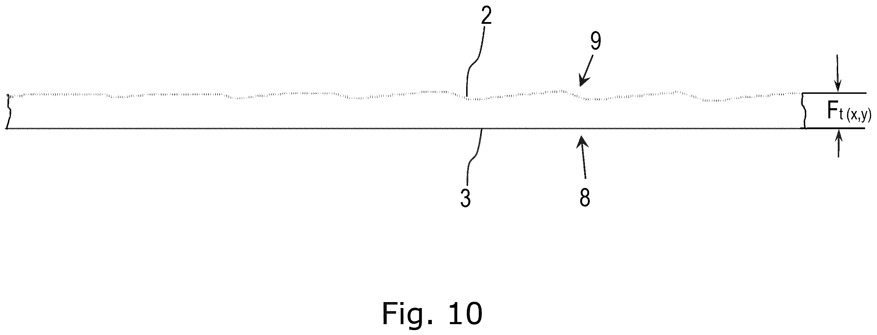

Fig. 10 zeigt einen Querschnitt durch die Verkehrsflächen 2, 3 in Richtung der Linie B-B in Fig. 7 vor der Bearbeitung. Die Linie B-B verläuft orthogonal zur Linie A-A in Fahrtrichtung der Fräsmaschine. Das Ist-Profil 9 zeigt dabei die in Fahrtrichtung bestehenden Unebenheiten, z. B. Längswelligkeiten der Verkehrsfläche 2.

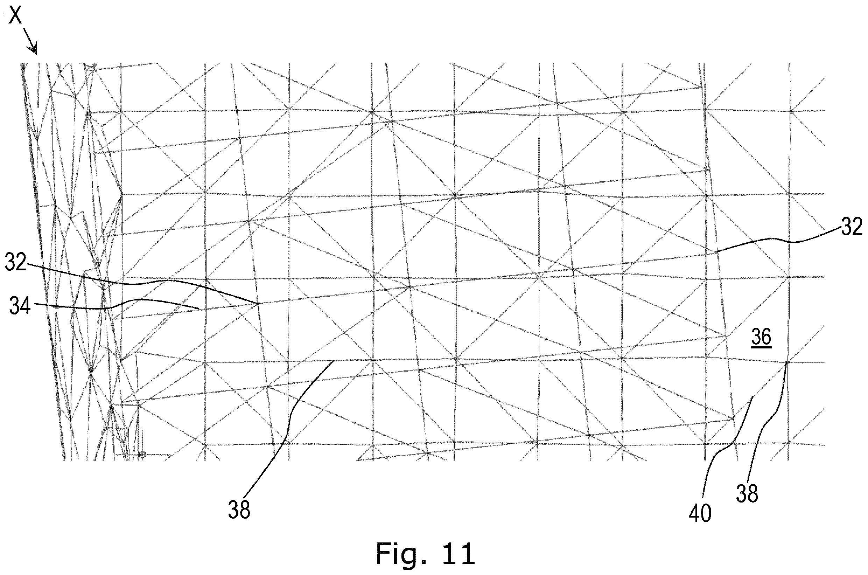

Fig. 11 ist eine vergrößerte Darstellung des Details X in Fig. 7 in Draufsicht, bei dem das Ist-Profil 9 mit dem darunterliegenden Soll-Profil 8 überlagert ist.

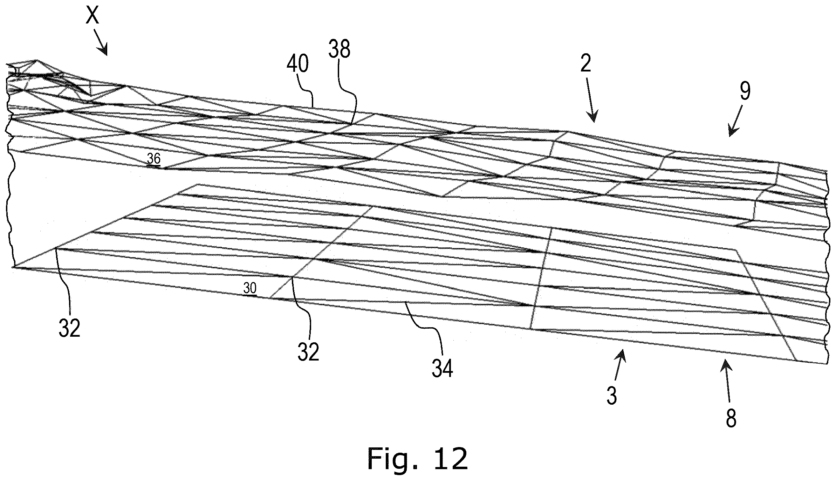

Fig. 12 zeigt schematisch eine perspektivische Ansicht des Ist-Profils 9 der unbearbeiteten Verkehrsfläche 2 mit ihren überhöht dargestellten Unebenheiten entsprechend dem Detail X in Fig. 7 und unterhalb der Verkehrsfläche 2 das ebene Soll-Profil der bearbeiteten Verkehrsfläche 3.

## Patentansprüche

1. Verfahren zum Abfräsen von Verkehrsflächen (2,3) mit einer höhenverstellbaren Fräswalze (4) einer Fräsmaschine (6), durch
- Erhalten und Speichern von Soll-Profildaten (x, y, Ft _{x,y)}) eines gewünschten Soll-Profils (8) einer Oberfläche der Verkehrsfläche (3) im Soll-Zustand, wobei Positionsdaten (x, y) in einem von der Fräsmaschine (6) unabhängigen, insbesondere stationären, Koordinatensystem Sollwerte (Ft _{(x,y)}) für eine lokal gewünschten Frästiefe (Ft) zugeordnet werden, die relativ zur Oberfläche der zu bearbeitenden Verkehrsfläche (2) vorgegeben werden,
- Bestimmen der aktuellen x, y-Position der Fräswalze (4) im Koordinatensystem und Erfassen der aktuell relativ zur Oberfläche der Verkehrsfläche (2,3) eingestellten Frästiefe (Ft') der Fräswalze (4),
- während des Abfräsens Steuern der Frästiefe (Ft) der Fräswalze (4) in Abhängigkeit des der aktuellen x, y-Position der Fräswalze (4) zugeordneten Sollwertes (Ft _{(x,y)}) für die lokal gewünschte Frästiefe (Ft) und der aktuell erfassten Frästiefe (Ft'),
- Aktualisieren der Soll-Profildaten (x, y, Ft _{(x,y)}) an der aktuellen Position (x, y) der Fräswalze (4) auf der bearbeiteten Verkehrsfläche (3) um die aktuell tatsächlich gefräste Frästiefe (Ft), und
- Speichern der aktualisierten Soll-Profildaten (x, y, Ft _{(x,y)}).

2. Verfahren zum Abfräsen von Verkehrsflächen (2,3) mit einer höhenverstellbaren Fräswalze (4) einer Fräsmaschine (6), durch
- Erhalten und Speichern von Ist-Profildaten (x, y, z) eines Ist-Profils der Oberfläche der zu bearbeitenden Verkehrsfläche (2) und Soll-Profildaten (x, y, z') eines gewünschten Soll-Profils der Oberfläche der Verkehrsfläche (3) im Soll-Zustand, wobei Positionsdaten (x, y) in einem von der Fräsmaschine (6) unabhängigen, insbesondere stationären, Koordinatensystem gemessene Ist-Profilwerte (z _{(x,y)}) bzw. vorgegebene lokal gewünschte Soll-Profilwerte (z' _{(x,y)}) für eine lokal gewünschte Frästiefe (Ft) zugeordnet werden, die relativ zur Oberfläche der zu bearbeitenden Verkehrsfläche (2) vorgegeben werden,
- Bestimmen der aktuellen x, y-Position der Fräswalze (4) im Koordinatensystem und Erfassen der aktuell relativ zur Oberfläche der Verkehrsfläche (2,3) eingestellten Frästiefe (Ft'),
- während des Abfräsens Steuern der Frästiefe (Ft) der Fräswalze (4) in Abhängigkeit der der aktuellen x, y -Position der Fräswalze (4) zugeordneten Differenz zwischen Ist-Profilwert (z _{(x,y)}) und Soll-Profilwert (z' _{(x,y)}) und der aktuell erfassten Frästiefe (Ft'),
- Aktualisieren der Ist-Profildaten (x, y, z) an der aktuellen Position (x, y) der Fräswalze (4) auf der bearbeiteten Verkehrsfläche (3) um die aktuell tatsächlich gefräste Frästiefe (Ft), und
- Speichern der aktualisierten Ist-Profildaten (x, y, z).

3. Verfahren nach Anspruch 1 oder 2, **gekennzeichnet durch** das
- Aufnehmen des Ist-Profils und Erzeugen von Ist-Profildaten (x, y, z) der zu bearbeitenden Verkehrsfläche (2) in einem von der Fräsmaschine (6) unabhängigen, insbesondere stationären, Koordinatensystem, und
- Erzeugen und Speichern des Soll-Profils durch Berechnen von Soll-Profildaten (x, y, Ft _{(x,y)}) auf der Basis der Ist-Profildaten (x, y, z) und der lokal gewünschten Frästiefe (Ft) relativ zur Oberfläche der Verkehrsfläche (2) oder durch Berechnen von Soll-Profildaten (x, y, z'_{(x,y)}) in dem unabhängigen Koordinatensystem auf der Basis der erhaltenen Ist-Profildaten (x, y, z) und der lokal gewünschten Frästiefe (Ft).

4. Verfahren nach Anspruch 1 bis 3, **dadurch gekennzeichnet, dass** beim Erzeugen des Soll-Profils für die Soll-Profildaten die herzustellende Verkehrsfläche (3) in Felder (36) unterteilt wird, wobei jedem Feld (36) oder jedem Knotenpunkt (38) der virtuellen Begrenzungslinien (40) zwischen den Feldern (36) eine x, y-Position zugeordnet wird, und/oder dass die Verkehrsfläche (2) beim Aufnehmen des Ist-Profils der zu bearbeitenden Verkehrsfläche (2) für das Erzeugen der Ist-Profildaten (x, y, z) in Felder (30) unterteilt wird, wobei jedem Feld (30) oder jedem Knotenpunkt (32) der virtuellen Begrenzungslinien (34) zwischen den Feldern (30) eine x, y-Position zugeordnet wird.

5. Verfahren nach einem der Ansprüche 1 bis 4, **dadurch gekennzeichnet, dass** die Frästiefe (Ft) an den stirnseitigen Enden mit den Positionen (x_{L}, y_{L}; x_{R}, y_{R}) der Fräswalze (4) hinsichtlich der jeweiligen aktuellen x, y-Position separat gesteuert wird.

6. Verfahren nach einem der Ansprüche 1 bis 5, **gekennzeichnet durch** das Speichern der aktualisierten Soll- bzw. Ist-Profildaten (x, y, Ft _{(x,y)}); (x, y, z) unter Berücksichtigung der Fräsbreite (Fb) und der räumlichen Orientierung der Fräswalze (4) in dem Koordinatensystem, wobei jeder x, y-Position der Fräswalze (4) auf der bearbeiteten Verkehrsfläche (3) an den stirnseitigen Enden mit den Positionen (x_{L}, y_{L}; x_{R}, y_{R}) der Fräswalze (4) der jeweilig aktualisierte Soll-Profilwert (Ft _{(xL,yL);} Ft _{(xR,yR)}) bzw. Ist-Profilwert (z _{(xL,yL);} z _{(xR,yR)}) zugeordnet wird.

7. Verfahren nach Anspruch 6, **dadurch gekennzeichnet, dass** Positionen (xₙ, yₙ) der Fräswalze (4) zwischen den stirnseitigen Enden mit den Positionen (x_{L}, y_{L}; x_{R}, y_{R}) interpolierte aktualisierte Soll-Profilwerte (Ft _{(xn,yn)}) bzw. Ist-Profilwerte (z _{(xn,yn)}) zugeordnet werden.

8. Verfahren nach einem der Ansprüche 4 bis 7, **dadurch gekennzeichnet, dass** die Verkehrsfläche (2,3) in dreieckige oder rechteckige Felder (30, 36) unterteilt wird, deren unterschiedliche oder gleiche Kantenlänge der virtuellen Begrenzungslinien (34,40) im Bereich zwischen 1 mm und 50 cm, vorzugsweise zwischen 5 mm und 20 cm, liegt.

9. Verfahren nach einem der Ansprüche 7 oder 8, **gekennzeichnet durch** das Zuordnen der aktualisierten interpolierten Soll-Profilwerte (Ft _{(xn,yn)}) bzw. Ist-Profilwerte (z _{(xn,yn)}) zu den von der Fräswalze (4) zwischen den Enden mit den Positionen (x_{L}, y_{L}; x_{R}, y_{R}) überstrichenen Knotenpunkten (38).

10. Verfahren nach einem der Ansprüche 1 bis 9, **dadurch gekennzeichnet, dass** für die x, y-Positionen der Ist-Profildaten und der Soll-Profildaten ein absolutes Koordinatensystem verwendet wird.

11. Verfahren nach einem der Ansprüche 1 bis 10, **dadurch gekennzeichnet, dass** das Verfahren ferner die zusätzlichen Schritte umfasst:
während eines ersten Fräsdurchgangs Ermitteln einer aktuellen x-, y-Position der Fräswalze (4) im Koordinatensystem;
während des ersten Fräsdurchgangs Erfassen der aktuellen Frästiefe (Ft');
während des ersten Fräsdurchgangs Steuerung der Frästiefe (Ft) der Fräswalze (4) und anteiliges Abfräsen der Verkehrsfläche (3) derart, dass eine gewünschte Fräsmenge der Verkehrsfläche (3) ausstehend verbleibt;
Aktualisierung der Soll-Profildaten (x, y, Ft_{(x,y)}) in der aktuellen Position (x, y) der Fräswalze (4) um die aktuell tatsächlich gefräste Frästiefe (Ft), wobei die aktualisierten Soll-Profildaten (x, y, Ft_{(x,y)}) einen aktualisierten Sollwert für die örtlich gewünschte Frästiefe (Ft) umfassen;
Speichern der aktualisierten Sollprofildaten (x, y, Ft_{(x,y)});
während eines zweiten Fräsdurchgangs Ermitteln einer aktuellen x-, y-Position der Fräswalze (4) im Koordinatensystem;
während des zweiten Fräsdurchgangs Erfassen der aktuellen Frästiefe (Ft'); und
während des zweiten Fräsdurchgangs Steuerung der Frästiefe (Ft) der Fräswalze (4) in Abhängigkeit vom aktualisierten Sollwert für die örtlich gewünschte Frästiefe (Ft_{(x,y)}), der der aktuellen x-, y-Position der Fräswalze (4) zugeordnet ist und der aktuell ermittelten Frästiefe (Ft').

12. Verfahren nach einem der Ansprüche 2 bis 10, **dadurch gekennzeichnet, dass** das Verfahren ferner die zusätzlichen Schritte umfasst:
während eines ersten Fräsdurchgangs Ermitteln einer aktuellen x-, y-Position der Fräswalze (4) im Koordinatensystem;
während des ersten Fräsdurchgangs Erfassen der aktuellen Frästiefe (Ft');
während des ersten Fräsdurchgangs Steuerung der Frästiefe (Ft) der Fräswalze (4) und anteiliges Abfräsen der Verkehrsfläche (3) derart, dass eine gewünschte Fräsmenge der Verkehrsfläche (3) ausstehend verbleibt;
Aktualisierung der tatsächlichen Profildaten (x, y, z) in der aktuellen Position (x, y) der Fräswalze (4) um die aktuell tatsächlich gefräste Frästiefe (Ft);
Speichern der aktualisierten tatsächlichen Profildaten (x, y, z);
während eines zweiten Fräsdurchgangs Ermitteln einer aktuellen x-, y-Position der Fräswalze (4) im Koordinatensystem;
während des zweiten Fräsdurchgangs Erfassen der aktuellen Frästiefe (Ft'); und
während des zweiten Fräsdurchgangs Steuerung der Frästiefe (Ft) der Fräswalze (4) in Abhängigkeit der der aktuellen x, y -Position der Fräswalze (4) zugeordneten Differenz zwischen Ist-Profilwert (z _{(x,y)}) und Soll-Profilwert (z' _{(x,y)}) und der aktuell erfassten Frästiefe (Ft').

13. Verfahren nach einem der Ansprüche 11 oder 12, **dadurch gekennzeichnet, dass** der erste und der zweite Fräsdurchgang von derselben Fräsmaschine (4) ausgeführt werden.

14. Verfahren nach einem der Ansprüche 11 oder 12, **dadurch gekennzeichnet, dass** der erste Fräsdurchgang von einer ersten Fräsmaschine (4) und der zweite Fräsdurchgang von einer zweiten Fräsmaschine (4) ausgeführt wird.

15. Verfahren nach einem der Ansprüche 11 oder 12, **dadurch gekennzeichnet, dass** die zweite Fräsmaschine (4) über die aktualisierten Soll-profildaten (x, y, Ft_{(x,y)}) und/oder der aktualisierten tatsächlichen Profildaten (x, y, z) verfügt.

16. Fräsmaschine (6) zum Abfräsen von Verkehrsflächen (2,3), mit
- einem Maschinenrahmen (12),
- mit einer höhenverstellbaren Fräswalze (4),
- einer Maschinensteuerung (10) zum Steuern der Frästiefe (Ft) mit einem Rechner (22) und einem Speicher (20),
- einer Positionsbestimmungseinrichtung (16), die Positionsdaten (x, y) für die aktuelle Position der Fräswalze (4) in einem von der Fräsmaschine (6) unabhängigen, insbesondere stationären, Koordinatensystem der Maschinensteuerung (10) zuführt,
- einer Frästiefenmesseinrichtung (18), die die aktuell eingestellte Frästiefe (Ft') der Fräswalze (4) der Maschinensteuerung (10) zuführt,
**dadurch gekennzeichnet, dass** die Maschinensteuerung (10) vorgegebene Soll-Profildaten (x, y, Ft_{(x,y)}) einer Oberfläche der Verkehrsfläche (3) im Soll-Zustand erhält, und die Soll-Profildaten (x, y, Ft _{(x,y)}) in dem Speicher (24) speichert, bei denen den Positionsdaten (x, y) relativ zur Oberfläche der zu bearbeitenden Verkehrsfläche (2) vorgegebene Sollwerte (Ft _{(x,y)}) für die lokal gewünschte Frästiefe (Ft) zugeordnet sind,
der Rechner (22) der Maschinensteuerung (10) in Abhängigkeit der aktuellen Positionsdaten (x, y) der Fräswalze (4), der aktuell erfassten Frästiefe (Ft') und dem der Position (x, y) der Fräswalze (4) zugeordneten Soll-Wert (Ft _{(x,y)}) die Frästiefe (Ft) der Fräswalze (4) steuert, wobei der Rechner (22) der Maschinensteuerung (10) die Soll-Profilwerte (Ft _{(x,y)}) der Soll-Profildaten (x, y, Ft _{(x,y)}) an der jeweiligen aktuellen Position (x, y) der Fräswalze (4) auf der gefrästen Verkehrsfläche (3) um die aktuell tatsächlich gefräste Frästiefe (Ft) aktualisiert und die aktualisierten Soll-Profildaten (x, y, Ft _{(x,y)}) in dem Speicher (24) speichert.

17. Fräsmaschine (6) zum Abfräsen von Verkehrsflächen (2,3), mit
- einem Maschinenrahmen (12),
- mit einer höhenverstellbaren Fräswalze (4),
- einer Maschinensteuerung (10) zum Steuern der Frästiefe (Ft) mit einem Rechner (22) und einem Speicher (24),
- einer Positionsbestimmungseinrichtung (16), die Positionsdaten (x, y) für die aktuelle Position (x, y) der Fräswalze (4) in einem von der Fräsmaschine (6) unabhängigen, insbesondere stationären, Koordinatensystem der Maschinensteuerung (10) zuführt,
- einer Frästiefenmesseinrichtung (18), die die aktuell erfasste (eingestellte oder gemessene) Frästiefe (Ft') der Fräswalze (4) der Maschinensteuerung (10) zuführt,
**dadurch gekennzeichnet,dass** die Maschinensteuerung (10) vorgegebene Ist-Profildaten (x, y, z) der Oberfläche der zu bearbeitenden Verkehrsfläche (2) und Soll-Profildaten (x, y, z') der Oberfläche der Verkehrsfläche (3) im Sollzustand erhält und in dem Speicher (24) speichert,
der Rechner (22) der Maschinensteuerung (10) in Abhängigkeit der aktuellen Positionsdaten (x, y) der Fräswalze (4), der aktuell erfassten Frästiefe (Ft') und der Differenz zwischen den Soll- und Ist-Profilwerten (z' _{(x,y)}); (z _{(x,y)}) die Frästiefe (Ft) der Fräswalze (4) steuert, wobei der Rechner (22) der Maschinensteuerung (10) die Ist-Profilwerte (z) der Ist-Profildaten in der jeweiligen aktuellen Position (x, y) der Fräswalze (4) auf der gefrästen Verkehrsfläche (3) um die aktuell tatsächlich gefräste Frästiefe (Ft) aktualisiert und die aktualisierten Ist-Profildaten (x, y, z) in dem Speicher (24) speichert.

18. Fräsmaschine (6) nach Anspruch 16 oder 17, **dadurch gekennzeichnet, dass** der Rechner (22) der Maschinensteuerung (10) die Frästiefe (Ft) an den stirnseitigen Enden mit den Positionen (x_{L}, y_{L}; x_{R}, y_{R}) der Fräswalze (4) bezüglich der jeweiligen Positionen (x_{L}, y_{L}) und (x_{R}, y_{R}) separat steuert.

19. Fräsmaschine (6) nach Anspruch 18, **dadurch gekennzeichnet, dass** die Maschinensteuerung (10) die aktualisierten Soll- bzw. Ist-Profildaten (x, y, Ft _{(x,y)}); (x, y, z) unter Berücksichtigung der Fräsbreite (Fb) und der räumlichen Orientierung der Fräswalze (4) in dem Speicher (24) abspeichert, wobei der Rechner (22) der Maschinensteuerung (10) jeder Position der Fräswalze (4) auf der gefrästen Verkehrsfläche (3) an den stirnseitigen Enden (x_{L}, y_{L}; x_{R}, y_{R}) der Fräswalze (4) den jeweilig aktualisierten Sollwert (Ft _{(xL,yL);} Ft _{(xR,yR)}) bzw. Ist-Profilwert (z _{(xL,yL);} z _{(xR,yR)}) zuordnet.

20. Fräsmaschine (6) nach Anspruch 19, **dadurch gekennzeichnet, dass** die Maschinensteuerung (10) Positionen (xₙ, yₙ) entlang der Fräswalze (4) zwischen den stirnseitigen Enden mit den Positionen (x_{L}, y_{L}; x_{R}, y_{R}) interpolierte aktualisierte Soll-Profilwerte (Ft _{(xn,yn)}) bzw. Ist-Profilwerte (z _{(xn,yn)}) zuordnet.

## Claims

1. A method for milling off traffic areas (2, 3) with a height-adjustable milling drum (4) of a milling machine (6) by means of
- obtaining and storing target profile data (x, y, Ft _{(x,y)}) of a desired target profile (8) of a surface of the traffic area (3) in target condition, wherein target values (Ft _{(x,y)}) for a locally desired milling depth (Ft), which are specified relative to the surface of the traffic area (2) to be worked, are assigned to position data (x, y) in an in particular stationary coordinate system independent of the milling machine (6),
- determining the current x, y position of the milling drum (4) in the coordinate system and detecting the milling depth (Ft') of the milling drum (4) currently adjusted relative to the surface of the traffic area (2, 3),
- during the milling operation, controlling the milling depth (Ft) of the milling drum (4) as a function of the target value (Ft _{(x,y)}) for the locally desired milling depth (Ft) assigned to the current x, y position of the milling drum (4) and the currently detected milling depth (Ft'),
- updating the target profile data (x, y, Ft _{(x,y)}) in the current position (x, y) of the milling drum (4) on the worked traffic area (3) by the currently actually milled milling depth (Ft), and
- storing the updated target profile data (x, y, Ft _{(x,y)}).

2. The method for milling off traffic areas (2, 3) with a height-adjustable milling drum (4) of a milling machine (6) by means of
- obtaining and storing actual profile data (x, y, z) of an actual profile of the surface of the traffic area (2) to be worked and target profile data (x, y, z') of a desired target profile of the surface of the traffic area (3) in target condition, wherein measured actual profile values (z _{(x,y)}) or specified locally desired target profile values (z' _{(x,y)}) for a locally desired milling depth (Ft), which are specified relative to the surface of the traffic area (2) to be worked, respectively, are assigned to position data (x, y) in an in particular stationary coordinate system independent of the milling machine (6),
- determining the current x, y position of the milling drum (4) in the coordinate system and detecting the milling depth (Ft') currently adjusted relative to the surface of the traffic area (2, 3),
- during the milling operation, controlling the milling depth (Ft) of the milling drum (4) as a function of the difference between the actual profile value (z _{(x,y)}) and the target profile value (z' _{(x,y)}) assigned to the current x, y position of the milling drum (4), and the currently detected milling depth (Ft'),
- updating the actual profile data (x, y, z) in the current position (x, y) of the milling drum (4) on the worked traffic area (3) by the currently actually milled milling depth (Ft), and
- storing the updated actual profile data (x, y, z).

3. The method in accordance with claim 1 or 2, **characterized by**
- recording the actual profile and generating actual profile data (x, y, z) of the traffic area (2) to be worked in an in particular stationary coordinate system independent of the milling machine (6), and
- generating and storing the target profile by means of calculating target profile data (x, y, Ft _{(x,y)}) on the basis of the actual profile data (x, y, z) and the locally desired milling depth (Ft) relative to the surface of the traffic area (2), or by means of calculating target profile data (x, y, z'_{(x,y)}) in the independent coordinate system on the basis of the actual profile data (x, y, z) obtained and the locally desired milling depth (Ft).

4. The method in accordance with claim 1 to 3, **characterized in that**, when generating the target profile for the target profile data, the traffic area (3) to be produced is divided into fields (36), wherein an x, y position is assigned to each field (36) or each node (38) of the virtual boundary lines (40) between the fields (36), and/or that, when recording the actual profile of the traffic area (2) to be worked, the traffic area (2) is divided into fields (30) for the purpose of generating the actual profile data (x, y, z), wherein an x, y position is assigned to each field (30) or each node (32) of the virtual boundary lines (34) between the fields (30).

5. The method in accordance with one of the claims 1 to 4, **characterized in that**, at the face ends with the positions (x_{L}, y_{L}; x_{R}, y_{R}) of the milling drum (4), the milling depth (Ft) is controlled separately with regard to the respective current x, y position.

6. The method in accordance with one of the claims 1 to 5, **characterized by** storing the updated target or actual profile data (x, y, Ft _{(x,y)}); (x, y, z), respectively, taking into account the milling width (Fb) and the three-dimensional alignment of the milling drum (4) in the coordinate system, wherein the respective updated target profile value (Ft _{(xL,yL);} Ft _{(xR,yR)}) or actual profile value (z _{(xL,yL);} z _{(xR,yR)}), respectively, is assigned to each x, y position of the milling drum (4) on the worked traffic area (3) at the face ends with the positions (x_{L}, y_{L}; x_{R}, y_{R}) of the milling drum (4).

7. The method in accordance with claim 6, **characterized in that** interpolated updated target profile values (Ft _{(xn,yn)}) or actual profile values (z _{(xn,yn)}), respectively, are assigned to positions (xₙ, yₙ) of the milling drum (4) between the face ends with the positions (x_{L}, y_{L}; x_{R}, y_{R}).

8. The method in accordance with one of the claims 4 to 7, **characterized in that** the traffic area (2, 3) is divided into triangular or rectangular fields (30, 36), the different or identical edge length of the virtual boundary lines (34,40) of which is in the range between 1 mm and 50 cm, preferably between 5 mm and 20 cm.

9. The method in accordance with one of the claims 7 or 8, **characterized by** assigning the updated interpolated target profile values (Ft _{(xn,yn)}) or actual profile values (z _{(xn,yn)}), respectively, to the nodes (38) passed over by the milling drum (4) between the ends with the positions (x_{L}, y_{L}; x_{R}, y_{R}).

10. The method in accordance with one of the claims 1 to 9, **characterized in that** an absolute coordinate system is used for the x, y positions of the actual profile data and target profile data.

11. A method in accordance with one of the claims 1 to 10, **characterized in that** the method further comprises the following additional steps:
during the first milling operation, determining the current x, y position of the milling drum (4) in the coordinate system;
during the first milling operation, detecting the current milling depth (Ft');
during the first milling operation, controlling the milling depth (Ft) of the milling drum (4) and proportionate milling of the traffic area (3) such that a desired milling quantity of the traffic area (3) remains outstanding;
updating the target profile data (x, y, Ft _{(x,y)}) in the current position (x, y) of the milling drum (4) by the currently actually milled milling depth (Ft), wherein the updated target profile data (x, y, Ft _{(x,y)}) include an updated target value for the locally desired milling depth (Ft);
storing the updated target profile data (x, y, Ft _{(x,y)});
during a second milling operation, determining a current x, y position of the milling drum (4) in the coordinate system,
during the second milling operation, detecting the current milling depth (Ft'); and
during the second milling operation, controlling the milling depth (Ft) of the milling drum (4) as a function of the updated target value for the locally desired milling depth (Ft_{(x,y)}) assigned to the current x, y position of the milling drum (4) and the currently detected milling depth (Ft').

12. The method in accordance with one of the claims 2 to 10, **characterized in that** the method further comprises the following additional steps:
during a first milling operation, determining a current x, y position of the milling drum (4) in the coordinate system;
during the first milling operation, detecting the current milling depth (Ft');
during the first milling operation, controlling the milling depth (Ft) of the milling drum (4) and proportionate milling of the traffic area (3) such that a desired milling quantity of the traffic area (3) remains outstanding;
updating the actual profile data (x, y, z) in the current position (x, y) of the milling drum (4) by the currently actually milled milling depth (Ft);
storing the updated actual profile data (x, y, z);
during a second milling operation, determining a current x, y position of the milling drum (4) in the coordinate system;
during the second milling operation, detecting the current milling depth (Ft'); and
during the second milling operation, controlling the milling depth (Ft) of the milling drum (4) as a function of difference between the actual profile value (z _{(x,y)}) and the target profile value (z' _{(x,y)}) assigned to the current x, y position of the milling drum (4), and the currently detected milling depth (Ft').

13. The method in accordance with one of the claims 11 or 12, **characterized in that** the first and the second milling operation are performed by the same milling machine (4).

14. The method in accordance with one of the claims 11 or 12, **characterized in that** the first milling operation is performed by a first milling machine (4), and the second milling operation is performed by a second milling machine (4).

15. The method in accordance with one of the claims 11 or 12, **characterized in that** the second milling machine (4) has the updated target profile data (x, y, Ft_{(x,y)}) and/or the updated actual profile data (x, y, z).

16. A milling machine (6) for milling off traffic areas (2, 3), comprising
- a machine frame (12),
- comprising a height-adjustable milling drum (4),
- a machine control system (10) for controlling the milling depth (Ft), comprising a computer (22) and a storage device (24),
- a position determination device (16), which feeds position data (x, y) for the current position of the milling drum (4) in an in particular stationary coordinate system independent of the milling machine (6) to the machine control system (10),
- a milling depth measuring device (18), which feeds the currently adjusted milling depth (Ft') of the milling drum (4) to the machine control system (10),
**characterized in that**
the machine control system (10) obtains specified target profile data (x, y, Ft_{(x,y)}) of a surface of the traffic area (3) in target condition, and stores those target profile data (x, y, Ft _{(x,y)}) in the storage device (24) for which target values (Ft _{(x,y)}) for the locally desired milling depth (Ft) specified relative to the surface of the traffic area (2) to be worked are assigned to the position data (x, y),
the computer (22) of the machine control system (10) controls the milling depth (Ft) of the milling drum (4) as a function of the current position data (x, y) of the milling drum (4), the currently detected milling depth (Ft') and the target value (Ft _{(x,y)}) assigned to the position (x, y) of the milling drum (4), wherein the computer (22) of the machine control system (10) updates the target profile values (Ft _{(x,y)}) of the target profile data (x, y, Ft _{(x,y)}) in the respective current position (x, y) of the milling drum (4) on the milled traffic area (3) by the currently actually milled milling depth (Ft), and stores the updated target profile data (x, y, Ft _{(x,y)}) in the storage device (24).

17. The milling machine (6) for milling off traffic areas (2,3), comprising
- a machine frame (12),
- comprising a height-adjustable milling drum (4),
- a machine control system (10) for controlling the milling depth (Ft), comprising a computer (22) and a storage device (24),
- a position determination device (16), which feeds position data (x, y) for the current position (x, y) of the milling drum (4) in an in particular stationary coordinate system independent of the milling machine (6) to the machine control system (10),
- a milling depth measuring device (18), which feeds the currently detected (adjusted or measured) milling depth (Ft') of the milling drum (4) to the machine control system (10),
**characterized in that**
the machine control system (10) obtains specified actual profile data (x, y, Ft_{(x,y)}) of the surface of the traffic area (2) to be worked, and target profile data (x, y, z') of the surface of the traffic area (3) in the target condition, and stores them in the storage device (24),
the computer (22) of the machine control system (10) controls the milling depth (Ft) of the milling drum (4) as a function of the current position data (x, y) of the milling drum (4), the currently detected milling depth (Ft') and the difference between the target and actual profile values (z' _{(x,y)}); (z _{(x,y)}), wherein the computer (22) of the machine control system (10) updates the actual profile values (z) of the actual profile data (x, y) of the milling drum (4) on the milled traffic area (3) by the currently actually milled milling depth (Ft), and stores the updated actual profile data (x, y, z) in the storage device (24).

18. The milling machine (6) in accordance with claim 16 or 17, **characterized in that** the computer (22) of the machine control system (10) controls the milling depth (Ft) at the face ends with the positions (x_{L}, y_{L}; x_{R}, y_{R}) of the milling drum (4) separately with regard to the respective positions (x_{L}, y_{L}) and (x_{R}, y_{R}).

19. The milling machine (6) in accordance with claim 18, **characterized in that** the machine control system (10) stores the updated target or actual profile data (x, y, Ft _{(x,y)}); (x, y, z), respectively, in the storage device (24) taking into account the milling width (Fb) and the spatial orientation of the milling drum (4), wherein the computer (22) of the machine control system (10) assigns the respective updated target value (Ft _{(xL,yL);} Ft _{(xR,yR)}) or actual profile value (z _{(xL,yL);} z _{(xR,yR)}), respectively, to each position of the milling drum (4) on the milled traffic area (3) at the face ends (x_{L}, y_{L}; x_{R}, y_{R}) of the milling drum (4).

20. The milling machine (6) in accordance with claim 19, **characterized in that** the machine control system (10) assigns interpolated updated target profile values (Ft _{(xn,yn)}) or actual profile values (z _{(xn,yn)}), respectively, to positions (xₙ, yₙ) along the milling drum (4) between the face ends with the positions (x_{L}, y_{L}; x_{R}, y_{R}).

## Revendications

1. Procédé de fraisage des surfaces de circulation (2, 3) à l'aide d'un rouleau fraiseur (4) réglable en hauteur d'une fraiseuse (6), par
- obtention et enregistrement de données de profil de consigne (x, y, Ft_{(x, y)}) d'un profil de consigne souhaité (8) d'une surface de la chaussée (3) dans l'état de consigne, dans lequel des valeurs de consigne (Ft_{(x, y)}) pour une profondeur de fraisage localement désirée (Ft), lesquelles sont prédéfinies par rapport à la surface de la chaussée (2) à traiter, sont associées à des données de position (x, y) dans un système de coordonnées indépendant de la fraiseuse (6), en particulier stationnaire,
- détermination de la position (x, y) actuelle du rouleau fraiseur (4) dans le système de coordonnées et détection de la profondeur de fraisage (Ft') actuelle du rouleau fraiseur (4) réglée par rapport à la surface de la chaussée (2, 3),
- pendant le fraisage commande de la profondeur de fraisage (Ft) du rouleau fraiseur (4) en fonction de la valeur de consigne (Ft_{(x, y)}) associée à la position (x, y) actuelle du rouleau fraiseur (4) pour la profondeur de fraisage (Ft) localement désirée et la profondeur de fraisage (Ft') actuellement détectée,
- mise à jour des données de profil de consigne (x, y, Ft_{(x, y)}) concernant la profondeur de fraisage (Ft) réellement fraisée à la position actuelle (x, y) du rouleau fraiseur (4) sur la chaussée traitée (3), et
- enregistrement des données de profil de consigne (x, y, Ft_{(x, y)}) mises à jour.

2. Procédé de fraisage des surfaces de circulation (2, 3) à l'aide d'un rouleau fraiseur (4) réglable en hauteur d'une fraiseuse (6), par
- obtention et enregistrement de données de profil réelles (x, y, z) d'un profil réel de la surface de la chaussée à traiter (2) et de données de profil de consigne (x, y, z') d'un profil de consigne souhaité de la surface de la chaussée (3) dans l'état de consigne, dans lequel des valeurs de profil réelles (z_{(x, y)}) mesurées ou des valeurs de consigne (z'_{(x, y)}) localement désirées et prédéfinies pour une profondeur de fraisage localement désirée (Ft), lesquelles sont prédéfinies par rapport à la surface de la chaussée (2) à traiter, sont associées à des données de position (x, y) dans un système de coordonnées indépendant de la fraiseuse (6), en particulier stationnaire,
- détermination de la position (x, y) actuelle du rouleau fraiseur (4) dans le système de coordonnées et détection de la profondeur de fraisage (Ft') actuelle réglée par rapport à la surface de la chaussée (2, 3),
- pendant le fraisage, commande de la profondeur de fraisage (Ft) du rouleau fraiseur (4) en fonction de la différence, associée à la position (x, y) actuelle du rouleau fraiseur (4), entre la valeur de profil réelle (z_{(x, y)}) et la valeur de profil de consigne (z'_{(x, y)}) et de la profondeur de fraisage (Ft') actuellement détectée,
- mise à jour des données de profil réelles (x, y, z) concernant la profondeur de fraisage (Ft) réellement fraisée à la position actuelle (x, y) du rouleau fraiseur (4) sur la chaussée traitée (3), et
- enregistrement des données de profil réelles (x, y, z) mises à jour.

3. Procédé selon la revendication 1 ou 2, **caractérisé par**
- la capture du profil réel et la génération de données de profil réelles (x, y, z) de la chaussée (2) à traiter dans un système de coordonnées indépendant de la fraiseuse (6), en particulier stationnaire, et
- la génération et l'enregistrement du profil de consigne par calcul de données de profil de consigne (x, y, Ft_{(x, y)}) sur la base des données de profil réelles (x, y, z) et de la profondeur de fraisage localement désirée (Ft) par rapport à la surface de la chaussée (2) ou par calcul de données de profil de consigne (x, y, z'_{(x, y)}) dans le système de coordonnées indépendant sur la base des données de profil réelles obtenues (x, y, z) et de la profondeur de fraisage localement désirée (Ft).

4. Procédé selon la revendication 1 à 3, **caractérisé en ce que** lors de la génération du profil de consigne, la chaussée (3) à produire est divisée en zones (36) pour les données de profil de consigne, dans lequel une position (x, y) est associée à chaque zone (36) ou à chaque point nodal (38) des lignes de délimitation virtuelles (40) entre les zones (36), et/ou **en ce que** la chaussée (2) est divisée en zones (30) pour la génération des données de profil réelles (x, y, z) lors de la capture du profil réel de la chaussée (2) à traiter, dans lequel une position (x, y) est associée à chaque zone (30) ou à chaque point nodal (32) des lignes de délimitation virtuelles (34) entre les zones (30).

5. Procédé selon l'une des revendications 1 à 4, **caractérisé en ce que** la profondeur de fraisage (Ft) aux extrémités frontales avec les positions (x_{L}, y_{L} ; x_{R}, y_{R}) du rouleau fraiseur (4) est commandée séparément en regard des positions (x, y) actuelles respectives.

6. Procédé selon l'une des revendications 1 à 5, **caractérisé par** l'enregistrement des données de profil actualisées de consignes et réelles, respectivement (x, y, Ft_{(x, y)}) et (x, y, z), en prenant en compte la largeur de fraisage (Fb) et l'orientation spatiale du rouleau fraiseur (4) dans le système de coordonnées, dans lequel la valeur de profil de consigne mise à jour (Ft_{(xL, yL)} ; Ft_{(xR, yR)}) ou valeur de profil réelle (z_{(xL, yL)} ; z_{(xR, yR)}) est associée à chaque position (x, y) du rouleau fraiseur (4) sur la chaussée à traiter (3) aux extrémités frontales avec les positions (x_{L}, y_{L} ; x_{R}, y_{R}) du rouleau fraiseur (4).

7. Procédé selon la revendication 6, **caractérisé en ce que** des valeurs de profil de consigne (Ft_{(xn, yn)}) interpolées mises à jour ou valeurs de profil réelles (z_{(xn, yn)}) sont associées à des positions (xₙ, yₙ) du rouleau fraiseur (4) entre les extrémités frontales avec les positions (x_{L}, y_{L} ; x_{R}, y_{R}) .

8. Procédé selon l'une des revendications 4 à 7, **caractérisé en ce que** la chaussée (2, 3) est divisée en zones triangulaires ou rectangulaires (30, 36), dont les différentes ou égales longueurs d'arête des lignes de délimitation virtuelles (34, 40) se trouvent dans un intervalle entre 1 mm et 50 cm, de préférence entre 5 mm et 20 cm.

9. Procédé selon l'une des revendications 7 ou 8, **caractérisé par** l'association des valeurs de profil de consigne (Ft_{(xn, yn)}) interpolées mises à jour ou valeurs de profil réelles (z_{(xn, yn)}) aux points nodaux balayés par le rouleau fraiseur (4) entre les extrémités avec les positions (x_{L}, y_{L} ; x_{R}, y_{R}).

10. Procédé selon l'une des revendications 1 à 9, **caractérisé en ce qu'**un système de coordonnées absolues est utilisé pour les positions (x, y) des données de profil réel et des données de profil de consigne.

11. Procédé selon l'une des revendications 1 à 10, **caractérisé en ce que** le procédé comprend en outre les étapes additionnelles :
- pendant une première opération de fraisage, détermination d'une position (x, y) actuelle du rouleau fraiseur (4) dans le système de coordonnées ;
- pendant la première opération de fraisage, détection de la profondeur de fraisage actuelle (Ft') ;
- pendant la première opération de fraisage, commande de la profondeur de fraisage (Ft) du rouleau fraiseur (4) et fraisage partiel de la chaussée (3) de telle sorte qu'une quantité de fraisage désirée de la chaussée reste en attente ;
- mise à jour des données de profil de consigne (x, y, Ft_{(x, y)}) concernant la profondeur de fraisage (Ft) réellement fraisée à la position actuelle (x, y) du rouleau fraiseur (4), dans lequel les données de profil de consigne (x, y, Ft_{(x, y)}) comprennent une valeur de consigne mise à jour pour la profondeur de fraisage (Ft) localement désirée ;
- enregistrement des données de profil de consigne (x, y, Ft_{(x, y)}) mises à jour ;
- pendant une deuxième opération de fraisage, détermination d'une position (x, y) actuelle du rouleau fraiseur (4) dans le système de coordonnées ;
- pendant la deuxième opération de fraisage, détection de la profondeur de fraisage actuelle (Ft') ; et
- pendant la deuxième opération de fraisage, commande de la profondeur de fraisage (Ft) du rouleau fraiseur (4) en fonction de la valeur de consigne mise à jour pour la profondeur de fraisage (Ft_{(x, y)}) localement désiré associée à la position (x, y) actuelle du rouleau fraiseur (4) et la profondeur de fraisage (Ft') déterminée actuellement.

12. Procédé selon l'une des revendications 2 à 10, **caractérisé en ce que** le procédé comprend en outre les étapes additionnelles :
- pendant une première opération de fraisage, détermination d'une position (x, y) actuelle du rouleau fraiseur (4) dans le système de coordonnées ;
- pendant la première opération de fraisage, détection de la profondeur de fraisage actuelle (Ft') ;
- pendant la première opération de fraisage, commande de la profondeur de fraisage (Ft) du rouleau fraiseur (4) et fraisage partiel de la chaussée (3) de telle sorte qu'une quantité de fraisage désirée de la chaussée reste en attente ;
- mise à jour des données de profil réelles (x, y, z) concernant la profondeur de fraisage (Ft) réellement fraisée à la position actuelle (x, y) du rouleau fraiseur (4) ;
- enregistrement des données de profil réelles mises à jour (x, y, z) ;
- pendant une deuxième opération de fraisage, détermination d'une position (x, y) actuelle du rouleau fraiseur (4) dans le système de coordonnées ;
- pendant la deuxième opération de fraisage, détection de la profondeur de fraisage actuelle (Ft') ; et
- pendant la deuxième opération de fraisage, commande de la profondeur de fraisage (Ft) du rouleau fraiseur (4) en fonction de la différence, associée à la position (x, y) actuelle du rouleau fraiseur (4), entre la valeur de profil réelle (z_{(x, y)}) et la valeur de profil de consigne (z'_{(x, y)}) et de la profondeur de fraisage (Ft') actuellement détectée.

13. Procédé selon l'une des revendications 11 ou 12, **caractérisé en ce que** la première et la deuxième opération de fraisage sont réalisées par la même fraiseuse (4).

14. Procédé selon l'une des revendications 11 ou 12, **caractérisé en ce que** la première opération de fraisage est réalisée par une première fraiseuse (4) et la deuxième opération de fraisage est réalisée par une deuxième fraiseuse (4).

15. Procédé selon l'une des revendications 11 ou 12, **caractérisé en ce que** la deuxième fraiseuse (4) dispose des données de profil de consigne mises à jour (x, y, Ft_{(x, y)}) et/ou des données de profil réelles mises à jour (x, y, z).

16. Fraiseuse (6) destinée au fraisage de chaussées (2, 3), dotée
- d'un châssis de machine (12),
- avec un rouleau fraiseur (4) réglable en hauteur,
- d'une commande de machine (10) destinée à commander la profondeur de fraisage (Ft), dotée d'un calculateur (22) et d'une mémoire (20),
- d'un dispositif de détermination de position (16), lequel fournit à la commande de machine (10) les données de position (x, y) pour la position actuelle du rouleau fraiseur (4) dans un système de coordonnées indépendant de la fraiseuse (6), en particulier stationnaire,
- d'un dispositif de mesure de la profondeur de fraisage (18), lequel fournit à la commande de machine (10) la profondeur de fraisage (Ft') actuellement réglée pour le rouleau fraiseur (4),
**caractérisée en ce que**
la commande de machine (10) obtient des donnés de profil de consigne prédéfinies (x, y, Ft_{(x, y)}) d'une surface de la chaussée (3) dans l'état de consigne et enregistre dans la mémoire (24) les données de profil de consigne (x, y, Ft_{(x, y)}), pour lesquelles des valeurs de consigne (Ft_{(x, y)}) pour la profondeur de fraisage localement désirée (Ft), prédéfinies par rapport à la surface de la chaussée (2) à traiter, sont associées aux données de position (x, y),
le calculateur (22) de la commande de machine (10) commande la profondeur de fraisage (Ft) du rouleau fraiseur (4) en fonction des données de position actuelles (x, y) du rouleau fraiseur (4), de la profondeur de fraisage actuellement détectée (Ft') et de la valeur de consigne (Ft_{(x, y)}) associée à la position (x, y) du rouleau fraiseur (4), dans laquelle le calculateur (22) de la commande de machine (10) met à jour les valeurs de profil de consigne (Ft_{(x, y)}) des donnés de profil de consigne (x, y, Ft_{(x, y)}) concernant la profondeur de fraisage (Ft) actuelle réellement fraisée à la position actuelle respective (x, y) du rouleau fraiseur (4) sur la chaussée fraisée (3) et enregistre les données de profil de consigne actualisées (x, y, Ft_{(x, y)}) dans la mémoire.

17. Fraiseuse (6) destinée au fraisage de chaussées (2, 3), dotée
- d'un châssis de machine (12),
- avec un rouleau fraiseur (4) réglable en hauteur,
- d'une commande de machine (10) destinée à commander la profondeur de fraisage (Ft), dotée d'un calculateur (22) et d'une mémoire (24),
- d'un dispositif de détermination de position (16), lequel fournit à la commande de machine (10) les données de position (x, y) pour la position actuelle (x, y) du rouleau fraiseur (4) dans un système de coordonnées indépendant de la fraiseuse (6), en particulier stationnaire,
- d'un dispositif de mesure de la profondeur de fraisage (18), lequel fournit à la commande de machine (10) la profondeur de fraisage (Ft') actuellement détectée (réglée ou mesurée) pour le rouleau fraiseur (4),
**caractérisée en ce que**
la commande de machine (10) obtient et enregistre dans la mémoire (24) les données de profil réelles prédéfinies (x, y, z) de la surface de la chaussée (2) à traiter et les données de profil de consigne (x, y, z') de la surface de la chaussée (3) à l'état de consigne,
le calculateur (22) de la commande de machine (10) commande la profondeur de fraisage (Ft) du rouleau fraiseur (4) en fonction des données de position actuelles (x, y) du rouleau fraiseur (4), de la profondeur de fraisage actuellement détectée (Ft') et de la différence entre les valeurs de consigne et réelle (z'_{(x, y)}) ; (z_{(x, y)}), dans laquelle
le calculateur (22) de la commande de machine (10) met à jour les valeurs de profil réelles (z) des donnés de profil réelles dans la position actuelle respective (x, y) du rouleau fraiseur (4) sur la chaussée fraisée (3) concernant la profondeur de fraisage (Ft) actuelle réellement et enregistre les données de profil réelles (x, y, z) dans la mémoire (24).

18. Fraiseuse (6) selon la revendication 16 ou 17, **caractérisée en ce que** le calculateur (22) de la commande de machine (10) commande séparément la profondeur de fraisage (Ft) aux extrémités frontales avec les positions (x_{L}, y_{L} ; x_{R}, y_{R}) du rouleau fraiseur (4) par rapport aux positions respectives (x_{L}, y_{L}) et (x_{R}, y_{R}).

19. Fraiseuse (6) selon la revendications 18, **caractérisée en ce que** la commande de machine (10) enregistre les données de profil actualisées de consignes et réelles, respectivement (x, y, Ft_{(x, y)}) et (x, y, z), en prenant en compte la largeur de fraisage (Fb) et l'orientation spatiale du rouleau fraiseur (4) dans le système de coordonnées, dans laquelle le calculateur (22) de la commande de machine (10) associe respectivement la valeur de profil de consigne mise à jour (Ft_{(xL, yL)} ; Ft_{(xR, yR)}) ou valeur de profil réelle (z_{(xL, yL)} ; z_{(xR, yR)}) à chaque position du rouleau fraiseur (4) sur la chaussée fraisée (3) aux extrémités frontales (x_{L}, y_{L} ; x_{R}, y_{R}) du rouleau fraiseur (4).

20. Fraiseuse (6) selon la revendication 19, **caractérisée en ce que** la commande de machine (10) associe des valeurs de profil de consigne (Ft_{(xn, yn)}) interpolées mises à jour ou valeurs de profil réelles (z_{(xn, yn)}) à des positions (xₙ, yₙ) le long du rouleau fraiseur (4) entre les extrémités frontales avec les positions (x_{L}, y_{L} ; x_{R}, y_{R}) .
